# FASCICULE DE BREVET EUROPEEN

(11) **EP 0 871 014 B1**
(45) Date de publication et mention de la délivrance du brevet: **25.06.2003**
(21) Numéro de dépôt: 98400901.9
(22) Date de dépôt: 10.04.1998
(51) Int. Cl.: G01D 5/245

(54) **Codeur magnétique de génération d'impulsion de référence**
Magnetische Codiervorrichtung mit Referenzimpuls
Magnetic encoder with an index pulse

(30) Priorité: 10.04.1997 US 837231
(43) Date de publication de la demande: 14.10.1998
(73) Titulaire: SNR ROULEMENTS, F-74000 Annecy (FR)
(72) Inventeur: La Croix, Mark E., 75116 Paris (FR); Santos, John A., 75116 Paris (FR); Lyle, Stephen J., 75116 Paris (FR)
(74) Mandataire: Ballot, Paul

(56) Documents cités:
- EP-A- 0 469 318
- EP-A- 0 539 602
- EP-A- 0 611 952
- FR-A- 2 479 453
- US-A- 5 568 048

## Description

La présente invention concerne d'une façon générale des codeurs magnétiques et, plus particulièrement, des codeurs magnétiques pour produire une impulsion de référence en addition à un signal de haute résolution.

Plus précisément, l'invention concerne un codeur magnétique, comprenant :
- une série de pôles magnétiques, régulièrement espacés le long d'une voie pour former une piste magnétique, certains au moins des pôles magnétiques étant séparés par des transitions polaires régulières alignées uniformément par rapport à la voie de la piste magnétique, cette piste magnétique comportant un bord et ;
- des moyens intégrés à la piste magnétique pour permettre la production d'un signal de référence.

Habituellement, dans un codeur incrémental rotatif, quand une impulsion de référence est nécessaire, le codeur comporte, pour remplir la fonction concernant l'impulsion de référence, une piste particulière qui est séparée de la piste de haute résolution. Un détecteur séparé est utilisé pour détecter la piste d'impulsion de référence. Des codeurs de ce genre peuvent comporter une cible constituée par un disque optique en vue d'une utilisation avec un détecteur optique ou bien une cible formée par une roue dentée ou un aimant en vue d'une utilisation avec un détecteur magnétique.

Pour des codeurs magnétiques, la piste de haute résolution et la piste d'impulsion de référence ne peuvent pas être placées dans des positions très rapprochées l'une de l'autre du fait que le champ magnétique provenant du pôle de référence créerait une perturbation dans la piste de haute résolution. Spécifiquement, la piste de haute résolution prévue sur le codeur doit être très précise. Si un champ perturbateur (comme un champ provenant d'un pôle de référence) se manifeste à proximité de cette piste, la précision sera altérée au voisinage de ce champ perturbateur.

En conséquence, les détecteurs utilisés avec des codeurs magnétiques produisent un signal avec une assez mauvaise précision si la piste de référence est placée à proximité de la piste de haute résolution. Il en résulte que des codeurs magnétiques qui font intervenir une impulsion de référence doivent être relativement gros pour pouvoir obtenir l'espacement nécessaire entre les deux pistes. En outre, il se pose de nombreux problèmes de fabrication en ce qui concerne la magnétisation d'une impulsion de référence placée très près d'une piste magnétique de haute résolution.

Ces difficultés peuvent être surmontées en intégrant à la piste magnétique les moyens permettant la production du signal de référence comme le montrent les documents de brevets US 5,568,048 et EP 0 611 952, dont chacun décrit un codeur du type générique auquel appartient le codeur de l'invention.

Toutefois, selon une première approche dévoilée par ces deux documents, les moyens intégrés à la piste magnétique pour permettre la production du signal de référence peuvent être constitués par une modification très localisée de cette piste, cette approche ne permettant de produire qu'un signal de référence de faible puissance.

Et selon une seconde approche, dévoilée par le document EP 0 611 952, les moyens intégrés peuvent être constitués par la suppression d'une transition polaire, cette seconde approche conduisant à une perte locale d'information sur la position instantanée de la piste magnétique.

La présente a pour but de proposer un codeur exempt de ces limitations.

A cette fin, le codeur de l'invention, par ailleurs conforme à la définition générique qu'en donne le préambule ci-dessus, est essentiellement caractérisé en ce que les moyens intégrés à la piste magnétique pour permettre la production du signal de référence comprennent au moins deux des pôles magnétiques séparés par une transition polaire irrégulière, inclinée par rapport aux transitions polaires régulières, de telle sorte qu'un détecteur magnétique situé à proximité du bord de la piste magnétique détecte un pôle large et un pôle étroit afin de permettre la production du signal de référence.

D'autres caractéristiques et avantages de l'invention seront mis en évidence dans la description détaillée qui va suivre, faite en relation avec les dessins ci-joints dans lesquels :
Les figures 1, 3, 4, 5, 7 et 9 sont des représentations schématiques illustrant différentes réalisations du codeur magnétique conforme à la présente invention ;
les figures 2, 6, 8 et 10 sont des représentations graphiques illustrant des signaux produits par les réalisations représentées ;
les figures 11, 12, 13 et 15 sont des représentations graphiques illustrant des traitements des signaux produits par les réalisations représentées ; et
la figure 14 est une représentation schématique illustrant un autre dispositif de détection utilisable avec la présente invention.

La présente invention résout les problèmes rencontrés dans l'art antérieur par intégration de l'impulsion de référence dans la piste magnétique utilisée de façon à produire le signal de haute résolution. Au moyen d'une légère modification d'une zone localisée sur la piste magnétique, une interférence magnétique est évitée tout en permettant la création d'un moyen d'obtention d'une impulsion de référence. Par exemple, si une zone d'un pôle est réalisée légèrement plus grande ou plus petite, une impulsion de référence peut être produite avec seulement une perturbation minimale ou nulle dans le signal de haute résolution.

Ce principe constitue la caractéristique de base des codeurs magnétiques d'impulsions de référence intégrées qui vont être décrits dans la suite. Dans tous les cas, une impulsion de référence analogique ou numérique est créée en exploitant la différence entre le signal de sortie d'un détecteur de référence et le signal de sortie d'un détecteur haute résolution. Ce signal de référence a une précision angulaire relativement faible, mais cependant le signal peut être synchronisé avec le signal de haute résolution pour produire un signal de référence très précis.

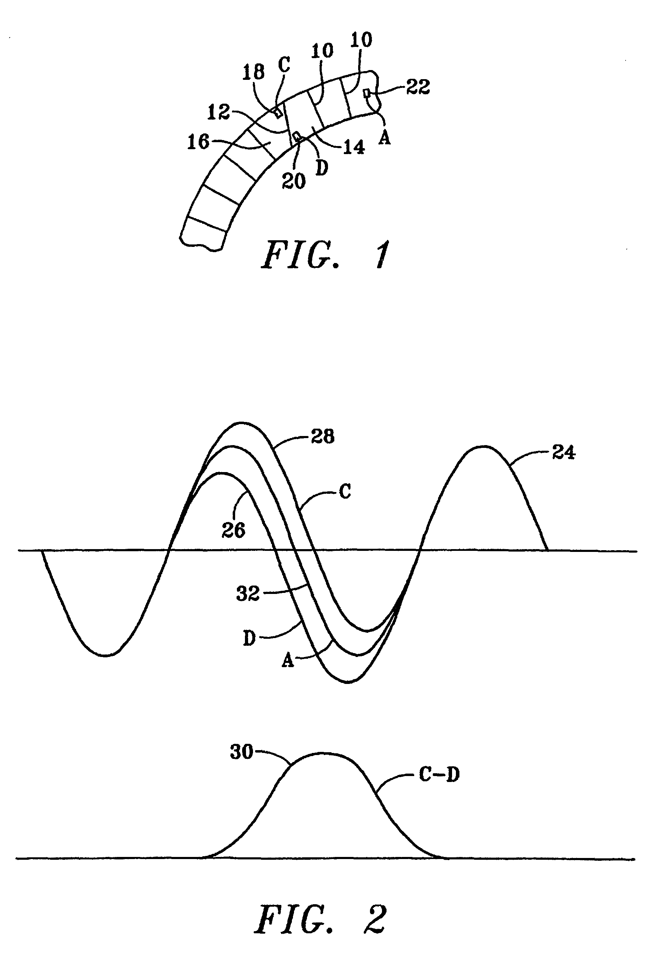

En référence maintenant aux dessins, la figure 1 représente une réalisation de l'invention dans laquelle des transitions polaires régulières 10, prévues dans un aimant magnétisé axialement, sont normalement perpendiculaires à une voie circulaire d'une piste magnétique circulaire, les transitions polaires régulières n'étant pas parfaitement parallèles entre elles mais convergeant vers un point situé au centre de la voie circulaire. Dans un aimant magnétisé radialement et comportant une piste magnétique le long d'une voie linéaire, non représentée, les transitions polaires régulières seraient normalement perpendiculaires à la voie linéaire et seraient parallèles entre elles.

Pour une intégration d'une impulsion de référence, une transition polaire irrégulière 12 située entre des pôles magnétiques 14 et 16 est inclinée par rapport à une ligne perpendiculaire à la voie de la piste magnétique. Dans cette réalisation, la transition polaire irrégulière 12 est définie par une ligne droite, inclinée de telle sorte qu'elle ne soit pas perpendiculaire à la piste et de telle sorte qu'elle divise les pôles magnétiques 14 et 16 en deux zones trapézoïdales de dimensions semblables. Un ou deux détecteurs magnétiques 18 et 20 sont placés vers les bords des pôles magnétiques comme indiqué. Si cela est souhaité, un détecteur magnétique 22 prévu sur option peut être disposé au centre de la piste magnétique pour obtenir une piste de haute résolution.

Pendant un fonctionnement normal, quand la transition polaire irrégulière 12 n'est pas proche des détecteurs magnétiques 18, 20 ou 22, tous les signaux de sortie des détecteurs sont en phase et se présentent d'une façon semblable, comme indiqué par la courbe 24 sur la figure 2. Quand la transition polaire irrégulière 12 est proche des détecteurs 18 ou 20, le champ magnétique sinusoïdal sera soit en avance soit en retard par rapport au champ magnétique détecté par le détecteur opposé, comme le montrent les courbes 26 et 28. La différence entre les signaux de sortie des détecteurs 18 et 20 permet la création d'une impulsion de référence 30 non synchronisée. Il existe au centre des pôles magnétiques une zone où le champ de haute résolution n'est pas perturbé, ce qui est détecté par le détecteur 22 sous la forme de la courbe 32 et ce qui correspond à la moyenne des courbes 26 et 28.

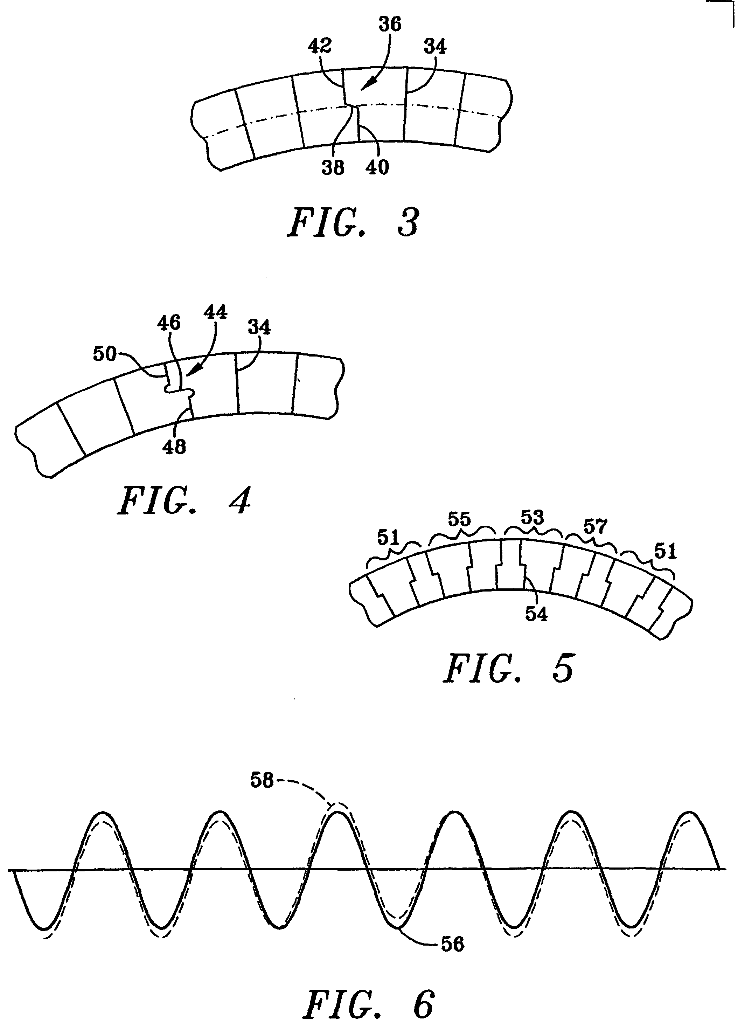

Dans la réalisation préférée représentée sur la figure 3, des parties distinctement séparées de la piste magnétique sont utilisées pour produire un signal de haute résolution et une impulsion de référence. Des transitions polaires régulières 34 sont perpendiculaires à la voie de la piste de haute résolution et au moins une transition polaire irrégulière 36 est inclinée par rapport à une perpendiculaire sous l'effet d'une transition avec échelon 38 se manifestant entre les bords polaires rectilignes 40 et 42. Il en résulte que la partie de la piste magnétique qui est définie par le bord polaire rectiligne 40 comporte une forme polaire idéale pour créer un signal de haute résolution et que la partie définie par le bord polaire rectiligne 42 comporte une forme polaire idéale pour créer un signal correspondant à une impulsion de référence.

La partie polaire de référence de la piste magnétique peut être réalisée plus petite ou plus grande en rapprochant ou en éloignant les bords polaires de référence d'une transition en échelon. Cette technique permet de disposer la partie de référence à proximité de la partie haute résolution sans perturber la partie de haute résolution et il est ainsi possible d'obtenir une plus grande zone utilisable sur la partie de haute résolution.

A de plus grandes distances du codeur, le champ magnétique a tendance à s'incurver en prenant un profil se rapprochant du champ magnétique engendré dans la réalisation de la figure 1 et en diminuant la zone de service utilisable à la fois pour les parties de haute résolution et de référence de la piste magnétique. La figure 4 met en évidence une modification de la réalisation de la figure 1, comportant une transition polaire irrégulière 44 pourvue d'un motif en échelon 46, qui dépasse des bords polaires rectilignes 48 et 50. Le champ magnétique résultant de la transition en échelon a tendance à se rapprocher d'une orientation idéale correspondant à un angle de 90 degrés pour les distances d'espacement entre l'aimant et le détecteur.

La figure 5 représente une autre réalisation de la présente invention dans laquelle toutes les paires de pôles 51 situés sur la partie de référence de la piste, dans la partie principale de l'aimant, sont successivement larges puis étroites en considérant l'aimant dans le sens des aiguilles d'une montre. La paire de pôles 53 séparés par la transition de référence 54 présente une disposition inversée. Spécifiquement, elle est d'abord étroite puis large lorsqu'on considère l'aimant dans le sens des aiguilles d'une montre. Les paires de pôles 55 et 57 sont semblables aux paires de pôles 51 excepté que le pôle le plus proche du pôle de référence est un pôle de largeur moyenne (c'est-à-dire ayant la même largeur qu'un pôle de la piste de haute résolution).

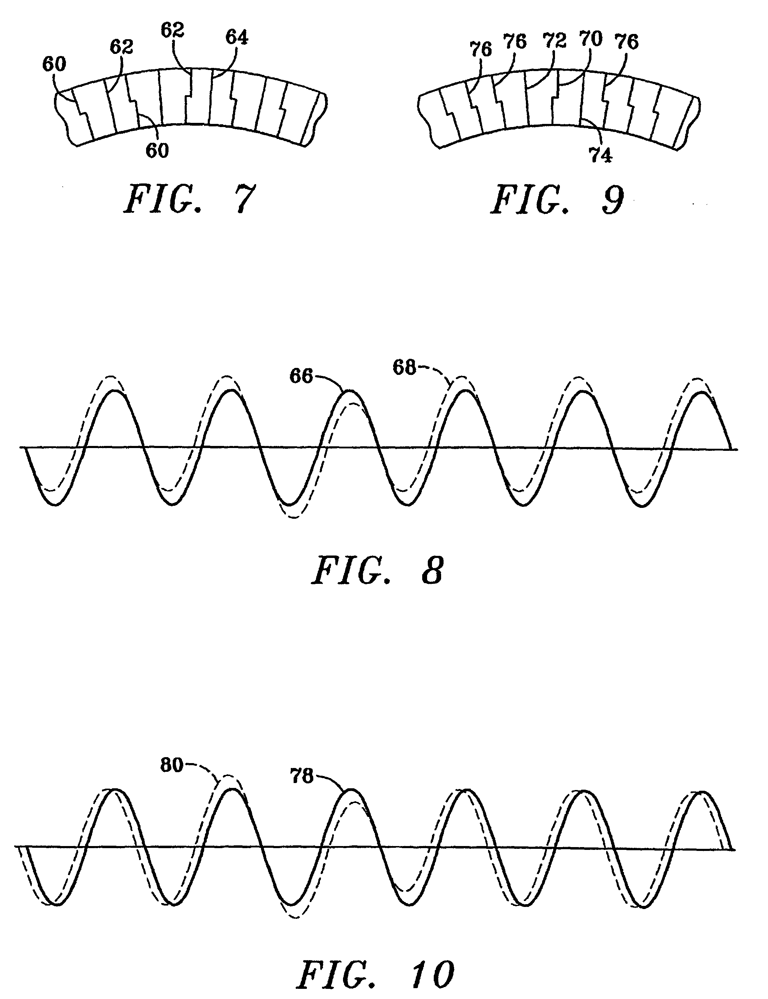

La figure 7 représente une réalisation de la présente invention comportant en alternance des transitions polaires 60 avec un échelon et des transitions polaires 62 sans échelon. La transition polaire de référence 64 est décalée dans la direction opposée par rapport aux autres transitions polaires. Cette configuration permet de créer une marge supplémentaire de sécurité lors du traitement des signaux sans perturbation de la partie de haute résolution de la piste haute résolution. La figure 8 représente le champ magnétique de la partie haute résolution sous la forme d'une courbe 66 et elle représente le champ magnétique de la partie à impulsion de référence sous la forme d'une courbe 68.

Dans la réalisation de la figure 9, un déphasage est créé entre la partie haute résolution de la piste magnétique et la partie à impulsion de référence en produisant un décalage dans une direction pour la transition polaire de référence 70, en supprimant le décalage pour les deux transitions polaires adjacentes 72 et 74 et en produisant un décalage dans la direction opposée pour toutes les autres transitions polaires 76. La figure 10 représente le champ magnétique de la partie haute résolution sous la forme d'une courbe 70 et elle représente le champ magnétique de la partie à impulsion de référence sous la forme d'une courbe 80.

Le codeur magnétique multipolaire de la présente invention peut être magnétisé en utilisant les techniques décrites d'une façon générale dans différents brevets des Etats-Unis. En principe, une impulsion de courant très forte mais courte est transmise par l'intermédiaire d'un conducteur (comme un fil), de telle sorte que le champ magnétique résultant soit canalisé à travers les pôles désirés. Pour une magnétisation avec une pièce polaire, cette pièce polaire est profilée de telle sorte que la transition polaire inclinée soit orientée de l'angle nécessaire. Pour une magnétisation avec un conducteur placé directement sur les transitions polaires désirées, ce conducteur est disposé sur l'aimant avec un angle semblable. Pour des aimants en matière plastique à base de ferrite (80%-93% de ferrite associée à du strontium ou du baryum dans une matrice plastique), les champs résultant sont typiquement compris entre 100 et 200 gauss sur la surface de l'aimant.

Dans la réalisation de la figure 1, un angle d'inclinaison de 2 à 45 degrés par rapport à une perpendiculaire serait satisfaisant. De plus grands angles d'inclinaison permettent d'obtenir une zone physiquement limitée qui est appropriée pour une détection de haute résolution mais qui produisent de grandes impulsions de référence. Des angles d'inclinaison plus petits produiront une impulsion de référence plus petite mais permettent d'obtenir une plus qrande zone appropriée pour une détection de haute résolution. Egalement de grands angles d'inclinaison produiront un champ magnétique pour lequel la partie de référence modifiée de la piste de haute résolution sera très proche de la partie de haute résolution non modifiée, en permettant ainsi un plus petit dimensionnement du détecteur. Inversement, de petits angles d'inclinaison nécessiteront des détecteurs de plus grandes dimensions.

Lors de la mise en oeuvre des réalisations illustrées, la dimension de l'échelon devrait de façon idéale être comprise entre 12,5 % et 25 % de la largeur des pôles. De petits échelons produiront une petite impulsion de référence et feront en sorte que théoriquement aucune interférence ne soit produite dans la zone de haute résolution. De plus grands échelons produiront une plus grande impulsion de référence et commenceront à créer une interférence dans la zone haute résolution.

Le détecteur utilisé avec le codeur magnétique de la présente invention pourrait être un dispositif à effet Hall ou un détecteur magnéto-résistif, mais on n'est pas limité aux dispositifs précités. De façon idéale, le détecteur devrait être très petit et comporterait les éléments de détection incorporés dans la même pièce en silicium. En fonction de la technique de traitement sélectionnée, les détecteurs devraient avoir approximativement le même gain et devraient être placés approximativement à la même distance de la face de l'aimant.

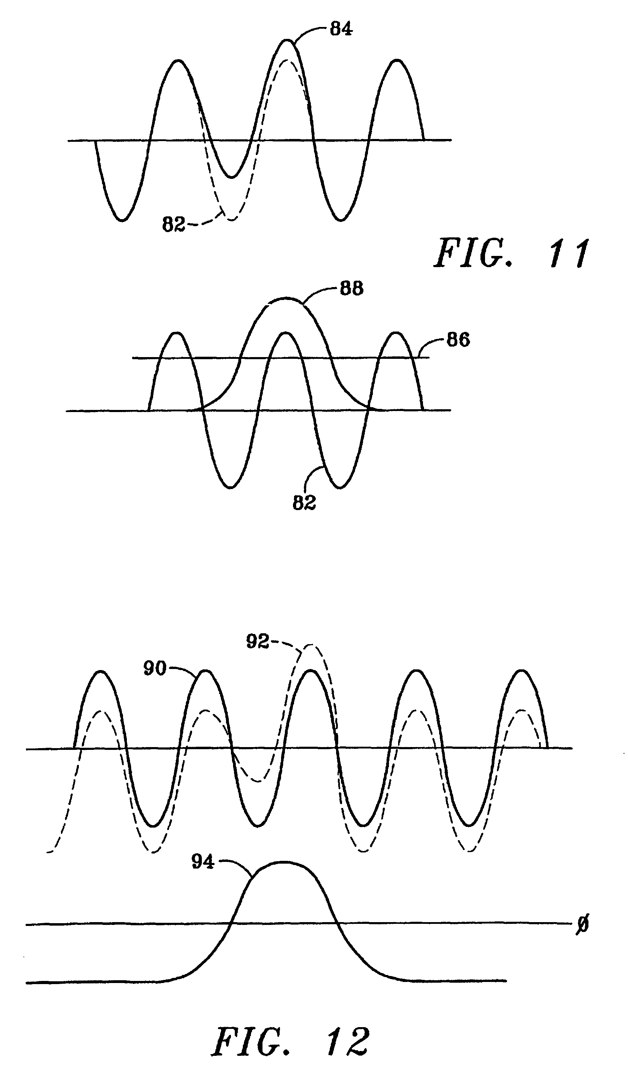

L'impulsion de référence analogique est obtenue en exploitant la différence entre le détecteur de haute résolution et le détecteur d'impulsion de référence. Ce signal est comparé avec un seuil prédéterminé. Le seuil pourrait être fixé, ou adapté à une fraction de l'amplitude de crête de l'onde sinusoïdale du signal. Par exemple le seuil pourrait être égal à 67 % de la crête de l'onde sinusoïdale, comme illustré par la courbe 86 sur la figure 11. Le signal produit par la partie de haute résolution de la piste magnétique est représenté par la courbe 82, le signal correspondant à la partie à impulsion de référence est représenté par la courbe 84 et une valeur triplée du signal différentiel est représentée par la courbe 88.

Pour la réalisation de la figure 5, le signal différentiel pourrait être traité de deux manières :
1) Une comparaison entre le détecteur de référence et le détecteur de haute résolution permet d' obtenir un signal de différence. Le seuil est choisi à zéro. La figure 12 met en évidence le signal de sortie du détecteur de haute résolution sous la forme de la courbe 90, le signal de sortie du détecteur de référence sous la forme de la courbe 92 et le signal différentiel sous la forme de la courbe 94.

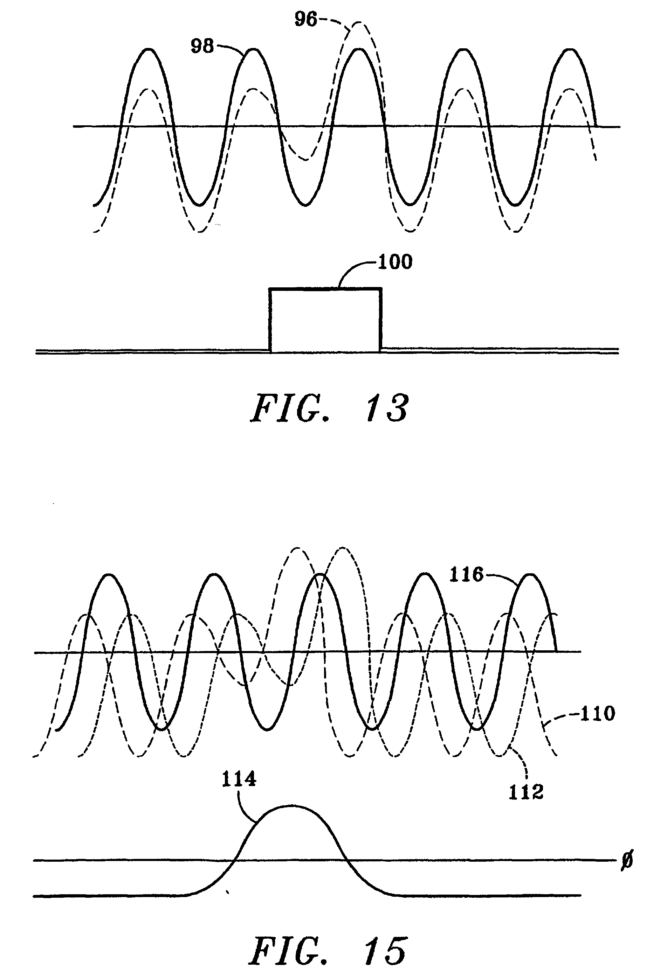

2) Au lieu de déterminer un signal différentiel entre les signaux provenant des détecteurs de référence et de haute résolution, on effectue juste une comparaison numérique des signaux. Si l'impulsion de référence est inférieure au signal du détecteur haute résolution, alors la référence numérique est "inactive". Si le signal du détecteur de référence est plus grand que le signal du détecteur haute résolution, alors la référence numérique est "active". Cela est plus simple que la technique précédente et donne de meilleurs résultats du fait qu'on ne fait pas intervenir un décalage additionnel à la sortie d'un amplificateur différentiel parce qu'un amplificateur concernant le signal de différence n'est pas nécessaire. Cette technique est mise en évidence sur la figure 13, où le signal de sortie du détecteur haute résolution est représenté par la courbe 96, le signal de sortie du détecteur d'impulsion de référence est représenté par la courbe 98 et le signal de sortie numérique est représenté par la courbe 100.

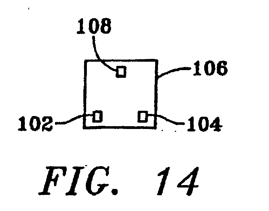

Une autre méthode pour la détection du signal de référence consiste à utiliser deux ou plus de deux détecteurs opérant sur la partie de référence de la piste magnétique, comme illustré sur la figure 14. De façon idéale, cette technique serait utilisée avec la réalisation des figures 5 ou 7. De préférence, deux détecteurs 102 et 104 seraient utilisés, en étant espacés l'un de l'autre d'une distance correspondant approximativement à un espacement polaire sur une seule pièce de silicium 106 comportant un détecteur haute résolution 108. Lorsque des signaux 110 et 112 provenant des détecteurs de référence 102 et 104 sont additionnés ensemble, il y a production d'un signal qui est proportionnel à la moyenne des deux signaux précités, ce qui est indiqué par la courbe 114 sur la figure 15. Il n'en dépend pas du détecteur haute résolution 108 d'obtenir une impulsion de référence ou un seuil. La courbe 116 représente le signal de sortie du détecteur haute résolution 108.

## Revendications

1. Codeur magnétique, comprenant :
- une série de pôles magnétiques, régulièrement espacés le long d'une voie pour former une piste magnétique, certains des pôles magnétiques étant séparés par des transitions polaires régulières (10) alignées uniformément par rapport à la voie de la piste magnétique, cette piste magnétique comportant un bord et ;
- des moyens intégrés à la piste magnétique pour permettre la production d'un signal de référence, **caractérisé en ce que** ces moyens intégrés comprennent au moins deux des pôles magnétiques (14, 16) séparés par une transition polaire irrégulière (12), inclinée par rapport aux transitions polaires régulières (10), de telle sorte qu'un détecteur magnétique (18) situé à proximité du bord de la piste magnétique détecte un pôle large et un pôle étroit afin de permettre la production du signal de référence.

2. Codeur magnétique selon la revendication 1, dans lequel les transitions polaires régulières (10) sont perpendiculaires à la voie de la piste magnétique et la transition polaire irrégulière (12) est définie par une ligne droite inclinée par rapport à une ligne perpendiculaire à la voie, en définissant ainsi deux pôles magnétiques adjacents (14, 16) ayant une forme trapézoïdale et des dimensions semblables.

3. Codeur magnétique selon la revendication 1, dans lequel les transitions polaires irrégulières inclinées (36) comprennent deux segments parallèles (40, 42) perpendiculaires à la voie de la piste magnétique et entre lesquels est prévue un échelon (38), orienté sensiblement dans le sens de la voie de la piste magnétique afin de créer un décalage entre les deux segments parallèles.

4. Codeur magnétique selon la revendication 3, dans lequel les transitions polaires magnétiques irrégulières (44) comportent deux segments polaires parallèles (48, 50) perpendiculaires à la voie de la piste magnétique et entre lesquels est prévu un échelon (46), orienté sensiblement le long de la voie de la piste magnétique et agencé de façon à créer entre les deux segments parallèles un décalage qui soit opposé à celui des transitions polaires irrégulières.

## Patentansprüche

1. Magnetischer Kodierer, umfassend:
- eine Reihe Magnetpole, die in regelmäßigem Abstand längs einer Bahn zum Bilden einer Magnetspur angeordnet sind, wobei bestimmte Magnetpole durch reguläre Polübergänge (10) voneinander getrennt sind, die gleichförmig bezüglich der Bahn der Magnetspur ausgerichtet sind, wobei diese Magnetspur einen Rand und
- Mittel umfaßt, die mit der Magnetspur integriert sind, um die Erzeugung eines Referenzsignales zu ermöglichen,
**dadurch gekennzeichnet, daß** die integrierten Mittel mindestens zwei Magnetpole (14, 16) umfassen, die durch einen irregulären polaren Übergang (12) voneinander getrennt sind, welcher bezüglich der regulären polaren Übergänge (10) geneigt ist, derart, daß ein magnetischer Detektor (8), der in der Nähe des Randes der Magnetspur gelegen ist, einen breiten Pol und einem schmalen Pol fühlt, um die Erzeugung des Referenzsignales zu ermöglichen.

2. Magnetischer Kodierer nach Anspruch 1, bei dem die regulären polaren Übergänge (10) senkrecht zur Bahn der Magnetspur verlaufen und der irreguläre polare Übergang (12) durch eine bezüglich einer Senkrechten zur Bahn geneigte Gerade definiert ist, so daß somit zwei benachbarte Magnetpole (14,16) von Trapezform und mit vergleichbaren Abmessungen definiert sind.

3. Magnetischer Kodierer nach Anspruch 1, bei dem die irregulären geneigten polaren Übergänge (36) zwei parallele Segmente (40,42) aufweisen, die senkrecht zur Bahn der Magnetspur sind und zwischen denen eine Stufe (38) vorgesehen ist, die im wesentlichen im Sinne der Bahn der Magnetspur orientiert ist, um einen Absatz zwischen den beiden parallelen Segmenten zu erzeugen.

4. Magnetischer Kodierer nach Anspruch 3, bei dem die irregulären polaren magnetischen Übergänge (44) zwei parallele polare Segmente (48,50) aufweisen, die senkrecht zur Bahn der Magnetspur stehen und zwischen denen eine Stufe (46) vorgesehen ist, die im wesentlichen längs der Bahn der Magnetspur orientiert und derart angeordnet ist, daß sie zwischen den beiden parallelen Segmenten einen Absatz schafft, der gegenüber demjenigen der irregulären polaren Übergänge gelegen ist.

## Claims

1. Magnetic encoder comprising:
- a series of magnetic poles regularly spaced along a path to form a magnetic track, certain of the magnetic poles being separated by regular polarity transitions (10) uniformly aligned relative to the path of the magnetic track, this magnetic track having an edge and;
- means integrated into the magnetic track to allow the generation of an index signal, **characterised in that** these integrated means include at least two magnetic poles (14, 16) separated by an irregular polarity transition (12) relative to the regular polarity transitions (10) such that a magnetic detector (18) situated close to the edge of the magnetic track detects a wide pole and a narrow pole in order to enable an index signal to be generated.

2. Magnetic encoder according to Claim 1, in which the regular polarity transitions (10) are perpendicular to the path of the magnetic track and the irregular polarity transition (12) is defined by a straight line inclined with respect to a line perpendicular to the path, thus defining two adjacent magnetic poles (14, 16) having a trapezoidal shape and similar dimensions.

3. Magnetic encoder according to Claim 1, in which the inclined irregular polarity translations (36) comprise two parallel segments (40, 42) perpendicular to the path of the magnetic track and between which is arranged a step (38) oriented approximately in the direction of the path of the magnetic track in order to create an offset between the two parallel segments.

4. Magnetic encoder according to Claim 3, in which the irregular magnetic polarity transitions (44) include two parallel polar segments (48, 50) perpendicular to the path of the magnetic track and between which is arranged a step (46) oriented approximately along the path of the magnetic track in order to create between the two parallel segments an offset which is opposite that of the irregular polarity transitions.
